# EUROPÄISCHE PATENTSCHRIFT

(11) **EP 0 867 325 B1**
(45) Veröffentlichungstag und Bekanntmachung des Hinweises auf die Patenterteilung: **05.08.2009**
(21) Anmeldenummer: 98103584.3
(22) Anmeldetag: 02.03.1998
(51) Int. Cl.: B60K 31/06, B60T 13/66

(54) **Bremsregelungsanlage für Kraftfahrzeuge mit einer ein- und ausschaltbaren elektronischen Geschwindigkeitsregeleinheit**
Brake control device with on/off switched speed control device
Système de contrôle de freinage avec dispositif de commande de la vitesse pouvant être mis en circuit ou hors circuit

(30) Priorität: 27.03.1997 DE 19712858
(43) Veröffentlichungstag der Anmeldung: 30.09.1998
(73) Patentinhaber: Bayerische Motoren Werke Aktiengesellschaft, 80788 München (DE)
(72) Erfinder: Toelge, Thomas, 80993 München (DE); Schoelzel, 81667 München (DE)

(56) Entgegenhaltungen:
- DE-A- 4 220 413
- US-A- 4 763 959
- US-A- 5 147 114
- US-A- 5 418 727

## Beschreibung

Die Erfindung betrifft eine Bremsregelungsanlage für Kraftfahrzeuge mit einer ein- und ausschaltbaren elektronischen Geschwindigkeitsregeleinheit nach dem Oberbegriff des Patentanspruchs 1.

Eine derartige Bremsanlage ist aus der DE 4 220 413 A gemäß Oberbegriff des Anspruchs 1 bekannt.

Aus der EP 0 484 995 A2 ist beispielsweise eine elektronische Geschwindigkeitsregeleinheit für Kraftfahrzeuge bekannt, die in Abhängigkeit von einem einstellbaren gewünschten Abstand zum vorausfahrenden Fahrzeug eine entsprechende Fahrzeuggeschwindigkeit bzw. Fahrzeugverzögerung vorgibt. Bei dieser bekannten Geschwindigkeitsregeleinheit ist die vorgegebene Fahrzeuggeschwindigkeit bzw. Fahrzeugverzögerung mittels eines automatischen Bremseingriffes durch die Bremsregelungsanlage des Kraftfahrzeuges einstellbar. Bei dieser Geschwindigkeitsregeleinheit ist nicht bekannt, wie vom eingeschalteten in den ausgeschalteten Zustand übergegangen wird.

Aus der DE 43 38 098 A1 ist eine Geschwindigkeitsregeleinheit bekannt, die eine vom Fahrer manuell vorgegebene Fahrzeuggeschwindigkeit unabhängig von der Betätigung des Gaspedals konstant hält. Eine Regelung durch einen automatischen Bremseingriff ist hieraus jedoch nicht bekannt. Diese bekannte Geschwindigkeitsregeleinheit wird bei Betätigung des Bremspedals vom eingeschalteten Zustand in den ausgeschalteten Zustand übergeführt.

Aus der DE 44 27 246 C2 ist eine Bremsregelungsanlage bekannt, durch die allgemein ein automatischer Bremseingriff möglich ist. Eine derartige Bremsregelungsanlage ist mit steuerbaren Komponenten, insbesondere Ventilen und Pumpen, ausgestattet, die in den Leitungen zur Förderung des Brems-Druckmittels angebracht sind. Eine derartige Bremsregelungsanlage weist zusätzlich an den Druckmittel-Leitungen angeschlossene Druckmittel-Speicherkammern auf. Durch eine derartige Bremsregelungsanlage sind im Falle eines automatischen Bremseingriffs, beispielsweise durch eine Geschwindigkeitsregeleinheit, beliebige vorgegebene Druckwerte in den Radbremszylindern unabhängig von der Betätigung des Bremspedals einstellbar.

Wird bei einer Bremsregelungsanlage mit einer eingeschalteten Geschwindigkeitsregeleinheit während eines automatischen Bremseingriffs vom Fahrer das Bremspedal betätigt, sind die Radbremszylinder bereits mit Druck beaufschlagt, so daß der Fahrer die Betätigung des Bremspedals schwergängiger empfindet als bei einem "normalen" Bremsvorgang; d. h. bei einem Bremsvorgang ohne vorausgehendem Bremseingriff bzw. bei unbefüllten Radbremszylindern. Somit ist die Zuordnung des Bremspedalweges zu einer daraus folgenden Verzögerung bei einer Betätigung des Bremspedals mit vorhergehendem Bremseingriff von der bei einer Betätigung des Bremspedals ohne vorhergehendem Bremseingriff unterschiedlich. Dies kann zu Irritationen des Fahrers führen.

Es ist daher Aufgabe der Erfindung, diese Zuordnung des Bremspedalweges zur daraus folgenden Verzögerung bei einer Betätigung des Bremspedals mit vorhergehendem Bremseingriff der Zuordnung bei Betätigung des Bremspedals ohne vorhergehendem Bremseingriff anzugleichen.

Diese Aufgabe wird durch die kennzeichnenden Merkmale des Patentanspruchs 1 gelöst.

Vorteilhafte Weiterbildungen der Erfindung sind die Gegenstände der Patentansprüche 2 und 3.

Erfindungsgemäß wird die eingeschaltete Geschwindigkeitsregeleinheit ausgeschaltet, wenn das Bremspedal durch den Fahrer betätigt wird. Dabei wird davon ausgegangen, daß das Bremspedal dann betätigt wird, wenn der Fahrer eine stärkere Verzögerung und somit einen höheren Soll-Druck in den Radbremszylindern wünscht, als durch den automatischen Bremseingriff eingestellt wurde. Wird während eines automatischen Bremseingriffs die Geschwindigkeitsregeleinheit ausgeschaltet, soll erfindungsgemäß der durch die Geschwindigkeitsregeleinheit zuletzt eingestellte Ist-Druck in den Radbremszylindern solange aufrechterhalten werden, bis ein Bremspedalweg zurückgelegt wurde, der dem Bremspedalweg entspricht, der bei einem Bremsvorgang ohne vorausgehendem Bremseingriff notwendig wäre, um denselben Ist-Druck in den Radbremszylindern zu erreichen, der mittels des automatischen Bremseingriffs durch die Geschwindigkeitsregeleinheit zuletzt eingestellt wurde. Bei Zurücklegen dieses Bremspedalwegs durch die Betätigung des Bremspedals wird erfindungsgemäß das dadurch zuviel geförderte Druckmittelvolumen nicht wie bei einem Bremsvorgang ohne vorausgehendem Bremseingriff in die Radbremszylinder, sondern in Form eines "Leerlaufs" in eine Druckmittel-Speicherkammer geleitet.

Dieser Leerlauf des Bremspedals erzeugt für den Fahrer in etwa das gewohnte Bremspedalbetätigungsgefühl sowohl bezüglich der aufzuwendenden Kraft auf das Bremspedal als auch bezüglich der erwarteten Verzögerung aufgrund dieses zurückgelegten Bremspedalweges. Ist der Bremspedalweg im Leerlauf zurückgelegt, der bei einem Bremsvorgang ohne vorausgehendem Bremseingriff zum Erreichen des in den Radbremszylindern aufgrund des Bremseingriffs vorherrschenden Ist-Druckes notwendig wäre, wird die erfindungsgemäße Ansteuerung ausgeschaltet und das durch die weitere Betätigung des Bremspedals geförderte Druckmittelvolumen wieder in die Radbremszylinder entsprechend einem "normalen" Bremsvorgang eingeleitet.

Die Gegenstände der Unteransprüche 2 und 3 betreffen zwei Alternativen bezüglich möglicher Druckmittel-Speicherkammern und bezüglich diesen zugeordneter Ventile für die Steuerung des Abflusses des zuviel geförderten Druckmittelvolumens im "Leerlauf" der Bremspedalbetätigung. Diese beiden Alternativen sind auch kombinierbar.

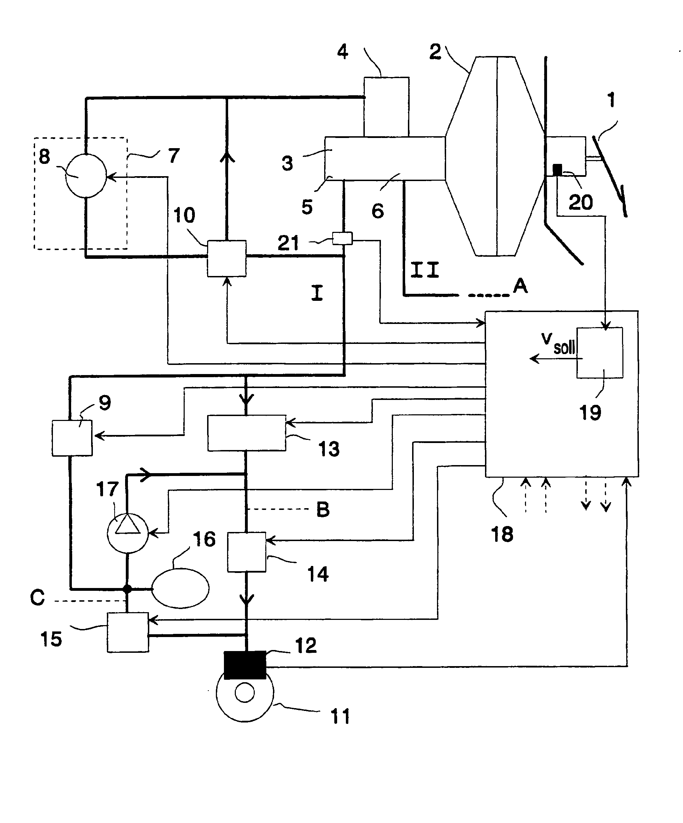

In der Zeichnung ist ein Ausführungsbeispiel der Erfindung dargestellt. Sie zeigt schematisch die funktionell wichtigsten Komponenten der erfindungsgemäßen Bremsregelungsanlage. Ergänzend wird für eine mögliche detailliertere Anordnung der hydraulischen Komponenten einer erfindungsgemäßen Bremsregelungsanlage auf Fig. 1 der DE 44 27 246 C2 und deren Beschreibung verwiesen.

In der Zeichnung ist ein Bremspedal 1 mit einem Bremskraftverstärker 2 verbunden. Am Bremskraftverstärker 2 schließt ein Haupt-Bremszylinder 3, vorzugsweise ein Tandem-Hauptbremszylinder, an. Der Haupt-Bremszylinder 3 ist mit einem Ausgleichsbehälter 4 verbunden. Der Haupt-Bremszylinder 3 weist zwei Druckausgänge 5 und 6 auf. Der Druckausgang 6 ist beispielsweise einem mit A angedeuteten, jedoch nicht konkret dargestellten Vorderachs-Bremskreis II zugeordnet. Der Druckausgang 5 des HauptBremszylinders 3 ist zum einen einem Hinterachs-Bremskreis I und zum anderen einem Vorladesystem 7 zugeordnet. Von dem Hinterachs-Bremskreis I der vorzugsweise hydraulischen Bremsregelungsanlage ist nur ein Rad 11 mit den für die Erfindung wesentlichen hydraulischen Komponenten als Beispiel dargestellt. Die hydraulischen Verbindungen zum zweiten Rad der Hinterachse sind mit B und C angedeutet.

Vom Druckausgang 5 führen hydraulische Druckmittel-Leitungen einerseits zu einem Umschaltventil 13 sowie zu einem Ladeventil 9 des HinterachsBremskreises I und andererseits zu einem dem Vorladesystem 7 zugeordneten Absperrventil 10. Vom Umschaltventil 13 führt eine Druckmittel-Leitung über ein Einlaßventil 14 zum Radbremszylinder 12 des Rades 11. Zwischen dem Radbremszylinder 12 und dem Einlaßventil 14 führt eine weitere Druckmittel-Leitung zu einem Auslaßventil 15, das ausgangsseitig mit einer Rückförderpumpe 17 verbunden ist. Zwischen dem Auslaßventil 15 und der Rückförderpumpe 17 zweigen einerseits eine erste Druckmittel-Speicherkammer 16 und andererseits eine Druckmittel-Leitung zum Ladeventil 9 ab. Die am Ausgang der Rückförderpumpe 17 angeschlossene Druckmittel-Leitung ist mit der zwischen dem Umschaltventil 13 und dem Einlaßventil 14 angeordneten Druckmittel-Leitung verbunden.

Vom Absperrventil 10 führt eine Druckmittel-Leitung zum Vorladesystem 7, das eine Druckmittel-Förderpumpe 8 aufweist. Eine weitere Druckmittel-Leitung verbindet das Absperrventil 10 mit dem als zweite Druckmittel-Speicherkammer wirkenden Ausgleichsbehälter 4. Andererseits ist auch das Vorladesystem 7 mit dem Ausgleichsbehälter 4 verbunden.

Die Bremsregelungsanlage weist ein elektronisches Steuergerät 18 auf, dessen Ausgänge über elektrische Steuerleitungen mit der Druckmittel-Förderpumpe 8, dem Absperrventil 10, dem Ladeventil 9, dem Umschaltventil 13, dem Einlaßventil 14, dem Auslaßventil 15 und der Rückförderpumpe 17 verbunden sind. Das Steuergerät 18 weist eine Geschwindigkeitsregeleinheit 19 auf, die über eine Eingangsleitung des Steuergerätes 18 mit einem Bremslichtschalter 20 verbunden ist, der als Sensor für den Beginn einer Betätigung des Bremspedals 1 dient. Weiterhin erhält das Steuergerät 18 als Eingangssignal das Sensorsignal des Drucksensors 21, der in der Druckmittel-Leitung am Druckausgang 5 den über die Betätigung des Bremspedals üblicherweise angeforderten Soll-Druck erfaßt, der direkt proportional zum zurückgelegten Bremspedalweg ist. Der in dem Radbremszylinder 12 tatsächlich vorherrschende Ist-Druck wird mittels eines Druck- oder Drehzahlsensors am Rad 11 erfaßt und als drittes Eingangssignal dem Steuergerät 18 zugeführt. Das Steuergerät 18 kann noch weitere Ein- und Ausgangssignale für verschiedene Fahrzeugparameter aufweisen.

Bei eingeschalteter Geschwindigkeitsregeleinheit 19 wird eine Soll-Fahrzeuggeschwindigkeit vₛₒₗₗ vorgegeben, die mittels eines automatischen Bremseingriffes durch die entsprechende Ansteuerung insbesondere der Ventile 9, 13, 14 und 15 aber auch der Rückförderpumpe 17 über die elektrischen Steuerleitungen des Steuergeräts 18 eingestellt wird. Durch den automatischen Bremseingriff stellt sich im Radbremszylinder 12 des Rades 11 und/oder der anderen Räder des Fahrzeuges ein Ist-Druck ein. Hierzu wird im wesentlichen das Umschaltventil 13 in eine Sperrstellung gebracht, das Ladeventil 9 geöffnet und mittels der Rückförderpumpe 17 und dem Einlaßventil 14 der zum Erreichen der vorgegebenen Fahrzeuggeschwindigkeit vₛₒₗₗ erforderliche Druck (Ist-Druck) in dem Radbremszylinder 12 aufgebaut.

Bei Beginn der Betätigung des Bremspedals 1 wird der Bremslichtschalter 20 geschlossen. Erfaßt das Steuergerät 18 bzw. die Geschwindigkeitsregeleinheit 19 die Schließstellung des Bremslichtschalters 20, wird die Geschwindigkeitsregeleinheit 19 ausgeschaltet. Erfindungsgemäß sind anschließend zwei (auch kombinierbare) Alternativen zur Ansteuerung der Bremsregelungsanlage durch das Steuergerät 18 möglich:

### 1. Alternative:

Das Umschaltventil 13 wird weiter in Sperrstellung gehalten. Über die elektrischen Steuerleitungen wird die Rückförderpumpe 17, das Ladeventil 9, das Einlaßventil 14 und das Auslaßventil 15 in der Weise angesteuert, daß der während des Bremseingriffs bei eingeschalteter Geschwindigkeitsregeleinheit 19 zuletzt eingestellte Ist-Druck im Radbremszylinder 12 beibehalten wird.

Das Absperrventil 10 wird geöffnet, so daß das durch die Betätigung des Bremspedals 1 zuviel geförderte Druckmittelvolumen über den Druckausgang 5 und das Absperrventil 10 in den Ausgleichsbehälter 4 abfließen kann. Die Druckmittel-Förderpumpe 8 wird vorzugsweise ausgeschaltet. Diese durch das Steuergerät 18 vorgenommene Ventilansteuerung wird solange beibehalten, bis durch die Betätigung des Bremspedals 1 ein Bremspedalweg zurückgelegt wurde, durch den der über die Geschwindigkeitsregeleinheit zuletzt eingestellte und beibehaltene Ist-Druck im Radbremszylinder 12 bei einem Bremsvorgang ohne vorgeschaltetem Bremseingriff ausgehend von einem unbefüllten Radbremszylinder aufgebaut worden wäre. Ist der zuvor beschriebene Bremspedalweg durchschritten, wird das Absperrventil 10 geschlossen und das Umschaltventil 13 wieder geöffnet. Diese Ventilstellungen entsprechen dem "Normalzustand", d. h. einem Bremsvorgang ohne automatischen Bremseingriff und ohne ABS-Regelung. Im Normalzustand besteht zu dem zurückgelegten Bremspedalweg bzw. zu dem über die Betätigung des Bremspedals angeforderten Soll-Druck eine direkte Zuordnung zu dem in den Radbremszylinder 12 geförderten Druckmittelvolumen bzw. zu dem im Radbremszylinder 12 vorherrschenden Ist-Druck.

### 2. Alternative.

Das Absperrventil 10 ist hierbei vorzugsweise als Rückschlagventil ohne Verbindung zum Ausgleichsbehälter 4 ausgeführt und bleibt geschlossen. Die Rückförderpumpe 17, das Ladeventil 9, das Umschaltventil 13, das Einlaßventil 14 und das Auslaßventil 15 werden in der Weise angesteuert, daß einerseits der durch die Geschwindigkeitsregeleinheit zuletzt im Radbremszylinder 12 eingestellte Ist-Druck aufrechterhalten wird und andererseits das durch die Betätigung des Bremspedals 1 zuviel geförderte Druckmittelvolumen über das Auslaßventil 15 in die erste Druckmittel-Speicherkammer 16 abfließt.

Ergänzend wird darauf hingewiesen, daß bei der zweiten Alternative der Hydraulikkreis zwischen dem Druckausgang 5 und dem Eingang des Ausgleichsbehälters 4 mit dem Vorladesystem 7 auch entfallen kann. Ein Vorladesystem 7 bzw. der Hydraulikkreis zwischen dem Druckausgang 5 und dem Eingang des Ausgleichsbehälters 4 ist insbesondere für Bremsanlagen erforderlich, die eine Fahrdynamikregelung zur Verhinderung von querdynamischen Instabilitäten aufweisen. Die erfindungsgemäße Bremsregelungsanlage kann mit einer derartigen Fahrdynamikregelung ausgestattet sein oder auch nicht.

Durch die erfindungsgemäße Bremsregelungsanlage empfindet der Fahrer keinen gravierenden Unterschied zwischen einer Bremsbetätigung ohne vorausgehendem Bremseingriff und einer Bremsbetätigung mit einem vorausgehenden Bremseingriff. In beiden Fällen ist die Zuordnung zwischen dem Bremspedalweg bzw. dem dadurch angeforderten Soll-Druck und der erwarteten Verzögerung gleich. Somit werden Irritationen des Fahrers bei der Bremsbetätigung verhindert, und die Sicherheit einer automatischen Bremsregelungsanlage erhöht.

## Patentansprüche

1. Bremsregelungsanlage für Kraftfahrzeuge mit einer ein- und ausschaltbaren elektronischen Geschwindigkeitsregeleinheit, durch die bei eingeschalteter Geschwindigkeitsregeleinheit eine vorgegebene Fahrzeuggeschwindigkeit mittels eines automatischen Bremseingriffs einstellbar ist, mit einem durch den Fahrer betätigbaren Bremspedal, mit Leitungen zur förderung des Brems-Druckmittels, mit an Leitungen angeschlossenen Druckmittel-Speicherkammern und mit in den Leitungen angebrachten steuerbaren Ventilen, durch die im Falle eines automatischen Bremseingriffs vorgegebene Druckwerte in den Radbremszylindern unabhängig von der Betätigung des Bremspedals eingestellt werden, **dadurch gekennzeichnet, daß** bei Betätigung des Bremspedals (1) die eingeschaltete Geschwindigkeitsregeleinheit (19) ausgeschaltet wird und anschließend die Ventile (9, 10, 13, 14, 15) derart angesteuert werden, daß unter Aufrechterhaltung des durch die Geschwindigkeitsregeleinheit (19) zuletzt mittels eines automatischen Bremseingriffs in den Radbremszylindern (12) eingestellten Ist-Druckes das durch die Betätigung des Bremspedals (1) zuviel geförderte Druckmittelvolumen in eine Druckmittel-Speicherkammer (4; 16) abfließt, bis der über die Betätigung des Bremspedals (1) üblicherweise angeforderte Soll-Druck in etwa diesem Ist-Druck in den Radbremszylindern (12) entspricht.

2. Bremsregelungsanlage nach Patentanspruch 1 mit Bremsregelungs-Komponenten, insbesondere ABS-Komponenten, die radzugeordnete Ein-und Auslaßventile umfassen, wobei die Auslaßventile ausgangsseitig mit einer Druckmittel-Speicherkammer verbunden sind, **dadurch gekennzeichnet, daß** bei Betätigung des Bremspedals (1) die Ein- und Auslaßventile (14, 15) derart angesteuert werden, daß unter Aufrechterhaltung des durch die Geschwindigkeitsregeleinheit (19) zuletzt mittels des automatischen Bremseingriffs in den Radbremszylindern (12) eingestellten Ist-Druckes das durch die Betätigung des Bremspedals (1) zuviel geförderte Druckmittelvolumen in die mit den Auslaßventilen (15) ausgangsseitig verbundene Druckmittel-Speicherkammer (16) abfließt, bis der über die Betätigung des Bremspedals (1) üblicherweise angeforderte Soll-Druck in etwa diesem Ist-Druck in den Radbremszylindern (12) entspricht.

3. Bremsregelungsanlage nach Patentanspruch 1 oder 2 mit einem Hauptbremszylinder und mit einem Vorladesystem, durch das mittels einer Pumpe Druckmittel in einen Ausgleichsbehälter des Hauptbremszylinders eingespeist wird, und mit einem Absperrventil zwischen den Druckmittel-Leitungen des Vorladesystem und den übrigen Druckmittel-Leitungen des Bremskreises, **dadurch gekennzeichnet, daß** bei Betätigung des Bremspedals (1) das Absperrventil (10) derart angesteuert wird, daß unter Aufrechterhaltung des durch die Geschwindigkeitsregeleinheit (19) zuletzt mittels des automatischen Bremseingriffs in den Radbremszylindern (12) eingestellten Ist-Druckes das durch die Betätigung des Bremspedals (1) zuviel geförderte Druckmittelvolumen in den als Druckmittel-Speicherkammer wirkenden Ausgleichsbehälter (4) abfließt, bis der über die Betätigung des Bremspedals (1) üblicherweise angeforderte Soll-Druck in etwa diesem Ist-Druck in den Radbremszylindern (12) entspricht.

## Claims

1. A brake control system for motor vehicles comprising an electronic speed control unit which can be switched on and off, by means of which, when the speed control unit is switched on, a predetermined vehicle speed can be set by means of an automatic brake intervention, comprising a brake pedal which can be actuated by the driver, with lines for conveying the brake pressure medium, with pressure medium storage chambers connected to lines and with controllable valves provided in the lines, by means of which valves pressure values predetermined in the case of an automatic brake intervention in the wheel brake cylinders are set independently of the actuation of the brake pedal, **characterised in that,** upon actuation of the brake pedal (1) the switched-on speed control unit (19) is switched off and the valves (9, 10, 13, 14, 15) are then activated in such a way that while maintaining the actual pressure last set by the speed control unit (19) by means of an automatic brake intervention in the wheel brake cylinders (12), the pressure medium volume conveyed in too great an amount by the actuation of the brake pedal (1) flows away into a pressure medium storage chamber (4; 16) until the desired pressure generally required by the actuation of the brake pedal (1) approximately corresponds to this actual pressure in the wheel brake cylinders (12).

2. A brake control system according to claim 1 with brake control components, especially ABS components, which comprise wheel-associated inlet and outlet valves, the outlet valves being connected on the output side to a pressure medium storage chamber, **characterised in that** upon actuation of the brake pedal (1), the inlet and outlet valves (14, 15) are activated in such a way that while maintaining the actual pressure last set by the speed control unit (19) by means of the automatic brake intervention in the wheel brake cylinders (12), the pressure medium volume conveyed in too great an amount by the actuation of the brake pedal (1) flows away into the pressure medium storage chamber (16) connected on the output side to the outlet valves (15) until the desired pressure generally required by the actuation of the brake pedal (1) approximately corresponds to this actual pressure in the wheel brake cylinders (12).

3. A brake control system according to claim 1 or 2, with a main brake cylinder and with a preload system, by means of which pressure medium is fed by means of a pump into a reservoir of the main brake cylinder, and with a shut-off valve between the pressure medium lines of the preload system and the remaining pressure medium lines of the brake circuit, **characterised in that,** upon actuation of the brake pedal (1), the shut-off valve (10) is activated in such a way that while maintaining the actual pressure last set by the speed control unit (19) by means of the automatic brake intervention in the wheel brake cylinders (12), the pressure medium volume which is conveyed in too great an amount by the actuation of the brake pedal (1) flows away into the reservoir (4) acting as a pressure medium storage chamber until the desired pressure generally required by the actuation of the brake pedal (1) approximately corresponds to this actual pressure in the wheel brake cylinders (12).

## Revendications

1. Installation de régulation de freinage pour des véhicules automobiles comprenant :
- une unité électronique de régulation de vitesse susceptible d'être activée et neutralisée, qui règle, lorsqu'elle est activée, une vitesse prédéfinie du véhicule par une action de freinage automatique,
- une pédale de frein actionnée par le conducteur,
- des conduites pour le liquide de frein,
- des chambres d'accumulation de liquide de frein sous pression reliées aux conduites, et
- des vannes commandées installées dans les conduites et qui, en cas d'action automatique de freinage, règlent des valeurs de pression prédéfinies dans les cylindres de frein de roue, indépendamment de l'actionnement de la pédale de frein,
**caractérisée en ce que**
lors de l'actionnement de la pédale de frein (1), le régulateur de vitesse (19) est neutralisé puis les vannes (9, 10, 13, 14, 15) sont commandées de façon qu'en maintenant la pression réelle réglée par l'unité de régulation de vitesse (19) à l'aide d'une action automatique de freinage sur les cylindres de frein de roue (12), le volume de liquide de frein sous pression, transféré en trop lors de l'actionnement de la pédale de frein (1), s'évacue dans une chambre d'accumulation de liquide sous pression (4, 16) jusqu'à ce que la pression de consigne demandée normalement par l'actionnement de la pédale de frein corresponde sensiblement à cette pression réelle dans les cylindres de frein de roue (12).

2. Installation de régulation de frein selon la revendication 1,
comportant des composants de régulation de frein notamment des composants ABS ayant des vannes d'entrée et de sortie associées aux roues,
les vannes de sortie étant reliées en sortie à une chambre d'accumulation de fluide sous pression,
**caractérisée en ce que**
lors de l'actionnement de la pédale de frein (1), les soupapes d'entrée et de sortie (14, 15) sont commandées pour qu'en maintenant la pression réelle, réglée par l'unité de régulation de vitesse (19) en dernier lieu par l'action automatique de freinage dans les cylindres de frein de roue (12), le volume de liquide sous pression fourni en trop par l'actionnement de la pédale de frein (1) soit évacué dans la chambre accumulatrice de liquide sous pression (16) reliée en sortie aux soupapes de sortie (15) jusqu'à ce que la pression de consigne, demandée habituellement par l'actionnement de la pédale de frein (1), corresponde sensiblement à cette pression réelle dans les cylindres de frein de roue (12).

3. Installation de régulation de frein selon la revendication 1 ou la revendication 2, comprenant un maître-cylindre et un système d'amplification qui introduit, par l'intermédiaire d'une pompe, du liquide hydraulique dans un réservoir de compensation du maître-cylindre et une vanne d'arrêt est prévue entre les conduites des moyens de pression du système de servofrein et les autres conduites de liquide sous pression du circuit de frein,
**caractérisée en ce qu'**
en actionnant la pédale de frein (1) on commande la vanne d'arrêt (10) de façon qu'en maintenant la pression réelle, appliquée par l'unité de régulation de vitesse (19) à l'aide de l'action automatique sur les freins dans les cylindres de frein de roue (12), le volume de liquide sous pression, débité en trop par l'actionnement de la pédale de frein (1), s'évacue dans des réservoirs de compensation (4) fonctionnant comme une chambre d'accumulation de liquide sous pression, ces réservoirs correspondant à la pression de consigne usuellement demandée par l'actionnement de la pédale de frein (1), et qui correspond sensiblement à cette pression réelle dans les cylindres de frein de roue (12).
